Europäisches Patentamt

European Patent Office

Office européen des brevets

(11) Veröffentlichungsnummer: **0 154 231**
**A2**

## (12) EUROPÄISCHE PATENTANMELDUNG

(21) Anmeldenummer: 85101672.5

(22) Anmeldetag: 15.02.85

(51) Int. Cl.⁴: **A 45 D 34/04**
A 45 D 40/26, A 45 D 33/00

(30) Priorität: 06.03.84 DE 3408162

(43) Veröffentlichungstag der Anmeldung:
11.09.85 Patentblatt 85/37

(84) Benannte Vertragsstaaten:
FR IT NL

(71) Anmelder: Georg Karl geka-brush GmbH

D-8802 Bechhofen-Waizendorf No. 8(DE)

(72) Erfinder: Fitjer, Holger
Th.-Heuss-Strasse 38
D-8540 Schwabach(DE)

(74) Vertreter: Patentanwälte Czowalla . Matschkur +
Partner
Dr.-Kurt-Schumacher-Strasse 23 Postfach 9109
D-8500 Nürnberg 11(DE)

(54) Applikator für flüssige, pastöse und pulverförmige Medien, insbesondere für Kosmetika.

(57) Applikator für flüssige, pastöse und pulverförmige Medien, insbesondere für Kosmetika, bestehend aus einem Vorratsbehälter, einem über eine Behälteröffnung mit diesem in Verbindung stehenden Auftrageelement sowie einer dieses übergreifenden Verschlußkappe, wobei im Bereich des Auftrage-elements mehrere, das Auftrageelement geringfügig überragende Verteilerelemente für das aufgetragene Medium angeordnet sind.

FIG.1

0154231

- 1 -

Applikator für flüssige, pastöse und pulverförmige Medien,
insbesondere für Kosmetika

Die Erfindung betrifft einen Applikator für flüssige, pastöse und pulverförmige Medien, insbesondere für Kosmetika,
bestehend aus einem Vorratsbehälter, einem über eine Behälteröffnung mit diesem in Verbindung stehenden Auftrageelement sowie einer dieses übergreifenden Verschlußkappe.

Es sind Applikatoren beispielsweise auf dem Gebiet der
Kosmetik, Pharmazie, der Dental- oder auch Schuhpflege
bekannt, mit deren Hilfe vorzugsweise Pasten oder Flüssigkeiten auf eine Oberfläche aufgetragen werden. Dabei wird
der Applikator mit dem Auftragemedium aus dem Innern des
Vorratsbehälters gespeist und dieses über die Oberfläche
des Auftrageelements auf den zu behandelnden Gegenstand
aufgetragen. Das Auftrageelement übernimmt zugleich die
Verteilerfunktion, eine Aufgabe, die es nicht optimal erfüllen kann, da auch während des Verteilvorgangs weiterhin
die Flüssigkeit über das Auftrageelement auf die Oberfläche
nachfließt. Dies führt dann zu Schwierigkeiten, wenn beispielsweise auf das Auftrageelement ein stärkerer Druck
ausgeübt wird, um einen höheren Massageeffekt zu erreichen.
Auf diese Weise wird der Verbrauch des Auftragemediums
unnötigerweise erhöht.

Aus dieser Situation hat sich das Bedürfnis nach einem
Applikator entwickelt, bei dem die verschiedenen Funktionen,

0154231

- 2 -

nämlich Auftragen und Verteilen bzw. Einmassieren des
Mediums von verschiedenen Elementen des Applikators wahrgenommen werden, wobei vor allem der Verteil- bzw. Massageeffekt intensiviert und optimiert werden soll.

Die Erfindung löst diese Aufgabe dadurch, daß im Bereich
des Auftrageelements mehrere, das Auftrageelement geringfügig überragende Verteilerelemente angeordnet sind. Diese
Verteilerelemente sind entweder innerhalb der Arbeitsfläche
des Auftrageelements oder um dessen Arbeitsfläche angeordnet. Durch diese erfindungsgemäße Ausgestaltung eines
Applikators gelangt das Auftragemedium aus dem Vorratsbehälter auf die Auftragefläche des Auftrageelements und wird
von dort auf die zu behandelnde Oberfläche appliziert.
Gleichzeitig wird das Auftragemedium von den Verteilerelementen verstrichen, verrieben und/oder einmassiert.
Auf diese Weise lassen sich vor allen Dingen unebene oder
poröse Oberflächen sehr viel intensiver mit dem Auftragemedium behandeln. Diese Verbesserung wirkt sich bevorzugt
beim Arbeiten mit Reinigungsmitteln oder Klebern positiv
aus, da selbst geringe Unebenheiten oder Vertiefungen mit
dem Auftragemedium erfaßt werden können. Das Material des
Auftrageelements, das vor allem saugfähige Eigenschaften
besitzen soll, richtet sich im wesentlichen nach der
Konsistenz des Auftragemediums und der Oberflächenbeschaffenheit des zu behandelnden Gegenstandes. Als besonders vorteilhaft haben sich die Werkstoffe Filz, Schaumstoff unterschiedlicher Härten, Gummi oder Moosgummi erwiesen.

Ausgehend von diesen allgemeinen Grundgedanken sieht die Erfindung weiterhin vor, daß das Auftrageelement und die Verteilerelemente an einem mit dem die Behälteröffnung aufweisenden Behälterhals verbundenen Trägerteil angeordnet sind. Die Art der Verbindung zwischen dem Trägerteil und den Verteilerelementen richtet sich nach den jeweils gewählten Werkstoffen. Wird der Trägerteil aus einem Kunststoff gefertigt, so ist es beispielsweise denkbar, in dem Trägerteil Vertiefungen auszustanzen, in die die Verteilerelemente eingesetzt und verklebt werden. Der Trägerteil kann in Größe und Form so ausgestaltet sein, daß er auf unterschiedliche Behältnisse, beispielsweise Container, Tuben, Flaschen usw. befestigt werden kann. Nach der Art des Behältnisses richtet sich auch die Befestigungsform des Trägerteils auf dem Behälter. So ist es durchaus möglich, den Trägerteil an dem Behälterhals anzuschweißen, oder aber mittels eines Schnapp-Verschlußes oder eines Gewindes zu befestigen. Das Auftrageelement ist mit dem Trägerteil vorzugsweise verklebt oder auf eine andere Weise mit diesem verbunden.

Die Erfindung bietet weiterhin die Möglichkeit, daß die Verteilerelemente aus Bürsten aus Naturhaar oder Kunsthaar od. dgl. bestehen oder aber als Spitzen, Noppen, Streifen, Schlingen od. dgl. ausgebildet und zweckmäßig stoffschlüssig an dem Trägerteil angeformt sind. Welche dieser Möglichkeiten letztendlich gewählt wird, hängt vor allem von der Art und Konsistenz des Auftragemediums und der Oberflächenbeschaffenheit des zu behandelnden Gegenstandes ab. Sind die Verteilerelemente beispielsweise aus Noppen aus Kunststoff ausgebildet, so ergibt sich aufgrund des härteren Werkstoff eine intensivere Behandlung oder Massage. Die stoffschlüssige Verbindung der Verteilerelemente mit dem Trägerteil ermöglicht eine rationelle und damit kostengünstige Herstellung des Applikators.

Die Erfindung sieht weiterhin vor, daß das Auftrageelement und der Trägerteil eine etwa mittige Bohrung aufweisen, die mit der Behälteröffnung in Verbindung steht. Durch diese Bohrung gelangt das Auftragemedium aus dem Vorratsbehälter auf die Auftragefläche des Auftrageelements. Der Durchmesser der Bohrung ist abhängig von der Konsistenz des Auftragemediums und dessen gewünschter Dosage. Der Durchmesser der Behälteröffnung kann dem Durchmesser des Behälterhalses entsprechen. In diesem Fall wird die effektive Durchtrittsfläche für das Auftragemedium durch den Durchmesser der Bohrung im Trägerteil bestimmt.

In weiterer Ausgestaltung der Erfindung sieht diese vor, an der Innenseite der Verschlußkappe einen die Behälteröffnung verschließenden Verschlußdorn anzuordnen. Beim Verschließen des Applikators reicht der Verschlußdorn durch die Bohrung des Auftrageelements und des Trägerteils hindurch und verschließt mit seiner vorderen Spitze die Behälteröffnung. Auf diese Weise wird eine Abdichtung bei Nichtbenutzung des Applikators erreicht.

Es ist außerdem vorgesehen, daß der Trägerteil und/oder das Auftrageelement querschnittlich rund, oval oder mehreckig sind. Diese Art der Ausgestaltung richtet sich vor allem nach dem Anwendungsgebiet des Applikators.

Weitere Merkmale, Einzelheiten und Vorteile der Erfindung ergeben sich aus der folgenden Beschreibung einiger Ausführungsformen der Erfindung sowie anhand der Zeichnung. Hierbei zeigen:

Fig. 1 den erfindungsgemäßen Applikator in Nichtgebrauchsstellung;

Fig. 2 einen vergrösserten Längsschnitt des Applikators in abgebrochener Darstellung;

Fig. 3 den Applikator in Draufsicht und

Fig.

4 - 7 verschiedene abgewandelte Ausführungsformen des Applikators.

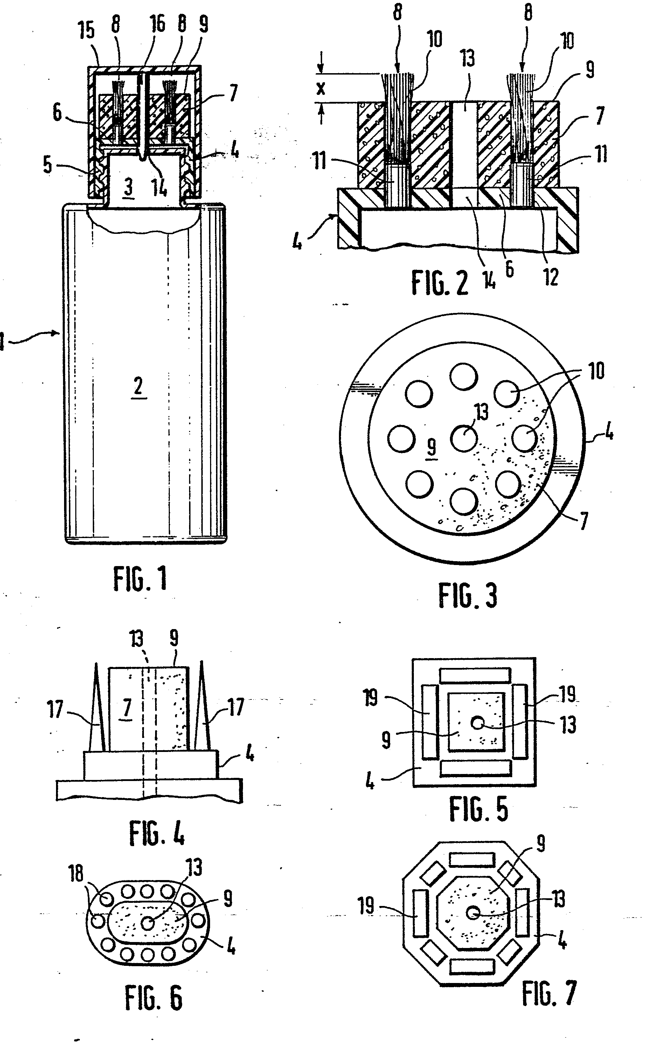

Der Applikator 1 (Fig. 1, Fig. 2) besteht aus einem Vorratsbehälter 2, an dessen Behälterhals 3 ein Trägerteil 4 befestigt ist. Im dargestellten Ausführungsbeispiel ist der Trägerteil 4 über ein Gewinde 5 mit dem Behälterhals 3 verbunden. An der Stirnfläche 6 des Trägerteils 4 ist ein Auftrageelement 7 befestigt, das aus einem saugfähigen Material, beispielsweise Filz, Gummi oder Schaumstoff besteht. Außerdem weist der Trägerteil 4 Verteilerelemente 8 auf, die im Bereich des Auftrageelements 7, bei der in Fig. 1 bis 3 dargestellten Ausführungsform innerhalb der Arbeitsfläche 9 des Auftrageelements 7 angeordnet sind und die Arbeitsfläche 9 um den Überstand x geringfügig überragen. Bei dieser Ausführungsform bestehen die Verteilerelemente 8 aus Bürsten 10, beispielsweise aus Natur- oder Kunsthaar, die in einem Schaft 11 gebündelt und in Vertiefungen 12 der Stirnfläche 6 des Trägerteils 4 eingesetzt sind. Der Trägerteil 4 und das Auftrageelement 7 weisen ungefähr in der Mitte eine Bohrung 13 auf (Fig. 2), die mit der Behälteröffnung 14 im Behälterhals 3 in Verbindung steht. In Nichtgebrauchsstellung (Fig. 1) ist der Applikator 1 mit einer Verschlußkappe 15 verschlossen, die an ihrer Innenseite einen Verschlußdorn 16 aufweist. Dieser Verschlußdorn 16 verschließt dabei die Bohrung 13 sowie die Behälteröffnung 14 und garantiert so eine sichere Abdichtung.

Beim Gebrauch des Applikators 1 gelangt das Auftragemedium, beispielsweise eine kosmetische Flüssigkeit, aus dem Innern des Vorratsbehälters 2 durch die Behälteröffnung 14 in die Bohrung 13 in das Auftrageelement 7 sowie auf dessen Auftragefläche 9. Von dort wird sie mit Hilfe des Auftrageelements 7 auf die zu behandelnde Oberfläche aufgetragen und mit den Verteilerelementen 8 verrieben bzw. einmassiert. Nach dem Gebrauch wird auf das Auftrageelement 7 eine Verschlußkappe 15 gesetzt.

Die in Fig. 4 bis 7 dargestellten Ausführungsformen des Trägerteils 4 sowie des Auftrageelements 7 weisen eine quadratische, ovale oder achteckige Querschnittsfläche auf. Dabei sind die Verteilerelemente 8 um die Arbeitsfläche 9 des Auftrageelements 7 angeordnet und in Fig. 4 als Spitzen 17 und in den anderen Ausführungsformen als Noppen 18 oder Streifen 19 ausgebildet. Sie bestehen aus dem gleichen Material wie das Trägerteil 4, beispielsweise Kunststoff, und sind daher stoffschlüssig an dem Trägerteil 4 angeformt. Es ist aber auch denkbar, daß die Verteilerelemente 8 aus einem weicheren Kunststoff hergestellt sind als der Trägerteil 4. Die Verwendung dieser speziellen Ausführungsformen richtet sich nach dem Anwendungszweck, der Oberflächenbeschaffenheit der zu behandelnden Oberfläche sowie der Konsistenz des Auftragemediums.

0154231

- 1 -

Patentansprüche

1. Applikator für flüssige, pastöse und pulverförmige Medien, insbesondere für Kosmetika, bestehend aus einem Vorratsbehälter, einem über eine Behälteröffnung mit diesem in Verbindung stehenden Auftrageelement sowie einer dieses übergreifenden Verschlußkappe, dadurch gekennzeichnet, daß im Bereich des Auftrageelements (7) mehrere, das Auftrageelement (7) geringfügig überragende Verteilerelemente (8) für das aufgetragene Medium angeordnet sind.

2. Applikator nach Anspruch 1, dadurch gekennzeichnet, daß die Verteilerelemente (8) innerhalb der Arbeitsfläche (9) des Auftrageelements (7) angeordnet sind.

3. Applikator nach Anspruch 1, dadurch gekennzeichnet, daß die Verteilerelemente (8) um die Arbeitsfläche (9) des Auftrageelements (7) angeordnet sind.

4. Applikator nach einem der Ansprüche 1 bis 3, dadurch gekennzeichnet, daß das Auftrageelement (7) und die Verteilerelemente (8) an einem mit dem die Behälteröffnung (14) aufweisenden Behälterhals (3) verbundenen Trägerteil (4) angeordnet sind.

5. Applikator nach einem der Ansprüche 1 bis 4, dadurch gekennzeichnet, daß die Verteilerelemente (8) aus Bürsten (10) aus Naturhaar, Kunsthaar od. dgl. bestehen.

6. Applikator nach einem der Ansprüche. 1 bis 4, <u>dadurch</u> <u>gekennzeichnet,</u> daß die Verteilerelemente (8) als Spitzen (17), Noppen (18), Streifen (19), Schlingen od. dgl. ausgebildet und stoffschlüssig an den Trägerteil (4) angeformt sind.

7. Applikator nach einem der Ansprüche 1 bis 6, <u>dadurch</u> <u>gekennzeichnet,</u> daß das Auftrageelement (7) und der Trägerteil (4) eine etwa mittige Bohrung (13) aufweisen, die mit der Behälteröffnung (14) in Verbindung steht.

8. Applikator nach einem der Ansprüche 1 bis 7, <u>dadurch</u> <u>gekennzeichnet,</u> daß an der Innenseite der Verschluß- kappe (15) ein die Behälteröffnung (14) verschließender Verschlußdorn (16) angeordnet ist.

9. Applikator nach einem der Ansprüche 1 bis 8, <u>dadurch</u> <u>gekennzeichnet,</u> daß der Trägerteil (4) und/oder das Auftrageelement (7) querschnittlich rund, oval oder mehreckig sind.

0154231

FIG. 1

FIG. 2

FIG. 3

FIG. 4

FIG. 5

FIG. 6

FIG. 7